# EUROPEAN PATENT SPECIFICATION

(11) **EP 3 649 071 B1**
(45) Date of publication and mention of the grant of the patent: **24.02.2021**
(21) Application number: 18749891.0
(22) Date of filing: 29.06.2018
(51) Int. Cl.: B66C 3/00, B66C 13/16

(54) **LINK MEMBER FOR CONNECTION OF A GRIPPING ASSEMBLY TO A HYDRAULIC CRANE ARM WITH INTEGRATED DYNAMIC WEIGHING ASSEMBLY**
VERBINDUNGSELEMENT ZUR VERBINDUNG EINER GREIFANORDNUNG MIT EINEM HYDRAULISCHEN KRANARM MIT INTEGRIERTER DYNAMISCHER WÄGEANORDNUNG
ÉLÉMENT DE LIAISON POUR LE RACCORDEMENT D'UN ENSEMBLE DE PRÉHENSION À UN BRAS DE GRUE HYDRAULIQUE DOTÉ D'UN ENSEMBLE DE PESAGE DYNAMIQUE INTÉGRÉ

(30) Priority: 06.07.2017 SI 201700207
(43) Date of publication of application: 13.05.2020
(73) Proprietor: Tajfun Planina Proizvodnja Strojev, D.o.o., 3225 Planina Pri Sevnici (SI)
(72) Inventor: UMEK, Anton, 4290 Trzic (SI); JERMAN, Boris, 1235 Radomlje (SI); GLIHA, Milan, 8210 Trebnje (SI); KOS, Anton, 2460 Bled (SI); SPAN, Iztok, 1000 Ljubljana (SI)
(74) Representative: Borstar, Dusan
(86) International application number: PCT/SI2018/000016
(87) International publication number: WO 2019/009817

(56) References cited:
- WO-A1-2013/025141
- WO-A1-2017/111684
- CN-B- 104 016 232
- US-B1- 9 000 311

## Description

The present invention refers to a link member of a gripping assembly, which is suitable for weighing of each load during reloading, wherein the onvention may optionally also refer to a rotatable gripping assembly or similar appliance mounted on the arm of a hydraulic crane, which is suitable for mounting onto a motor vehicle and then for manipulating with each load, the weight of which can be measuring during said manipulating. Such inventions in accordance with the International Patent Classification belong to transporting and working operations, namely to cranes, in particular to weighing apparatuses integrated in cranes, and therefore into class B 66 C 13/16.

The purpose of the invention is to modify a known link member, which is generally used for attachment of each gripping assembly, optionally together with a rotator, to each crane arm, such that in addition to said attachment of said gripping assembly said member link could also enable weighing of each load during each manipulating therewith by means of said crane and each belonging gripping assembly, wherein said determining of each weight of the load could be performed precisely and accurately despite to movement and rotation of the load in all possible directions during manipulation therewith.

A crane arm with a link member for attachment of each operation assembly is disclosed in EP 1 889 808, wherein a rotational operation assembly, in particular a gripping assembly for gripping logs or similar at least approximately cylindrical loads and manipulating therewith, is attached to said crane arm via said link member.

A link member as such is disclosed in EP 2 931 646 B1. Such link member in the arm of such hydraulic crane comprises two pivot joints, which are in direction of vertical axis spaced apart from each other, namely a top pivot joint, which is arranged on the side of a crane arm, and a bottom pivot joint, which is arranged on the side of a rotator or a gripping assembly for handling each load. Said pivot joints are conceived substantially as a Cardan joint, and rotational axis thereof, around which said link member can be pivoted relatively to the crane arm and/or relatively to said rotator, extend parallel to each other. Said bottom pivot joint of the link member is adjusted for pivotally connecting said link member with said rotator and is conceived as an eye and furnished with a throughout passage, which extends along said rotational axis of the bottom pivot joint and is adjusted to receive a bolt for establishing a pivotal connection with said rotator, while said top pivot joint of the link member is adjusted for pivotally connecting said link member with said crane arm and is bifurcated and comprises two arms, which are each per se furnished with a throughout passage, which extends along said rotational axis of the top pivot joint and is adjusted to receive a bolt for establishing a pivotal connection with said crane arm. Hydraulic conduits, which are arranged between the crane arm and hydraulic connections on the rotator, extend between said arms on the top pivot joint of the link member.

Moreover a weighing apparatus for cranes is disclosed in CN 10 4016 232 A, which consists of a bearing eye and a hook, which are vertically spaced apart from each other. Said bearing eye is attached to a top bearing plate, and said hook is attached to a bottom bearing plate, and all these components are protected by a cover. Said bearing plates are interconnected via a sensor, which is suitable for detecting each extensions, which occur due to tension stresses resulting from the weight of each load. A comparative load with a sensor suitable for measuring of accelerations is hanging below said upper bearing plate, upon which the weight of each load during manipulation therewith can be determined by means of a comparative method. Such weighing apparatus is deemed to provide accurate measuring results, but in fact each result is false due to nonlinear deformations and friction hysteresis US 9000 311 discloses a weighing apparatus with the features of the preamble of claim 1.

The present invention refers to a link member for connection of a gripping assembly to a hydraulic crane arm, which is suitable for dynamic weighing of loads. Moreover, the invention also includes cranes, including a mobile cranes and hydraulic mobile cranes, which are furnished with such link member.

Such link member in the arm of such hydraulic crane comprises two pivot joints, which are in direction of vertical axis spaced apart from each other, namely a top pivot joint, which is arranged on the side of a crane arm, and a bottom pivot joint, which is arranged on the side of a rotator or a gripping assembly for handling each load. Said pivot joints are conceived substantially as a Cardan joint, and rotational axis thereof, around which said link member can be pivoted relatively to the crane arm and/or relatively to said rotator, extend parallel to each other. Said bottom pivot joint of the link member is adjusted for pivotally connecting said link member with said rotator and is conceived as an eye and furnished with a throughout passage, which extends along said rotational axis of the bottom pivot joint and is adjusted to receive a bolt for establishing a pivotal connection with said rotator, which then allows pivoting around said axis, and wherein said top pivot joint of the link member is adjusted for pivotally connecting said link member with said crane arm and is conceived as an eye and furnished with a throughout passage, which extends along said rotational axis of the top pivot joint and is adjusted to receive a bolt for establishing a pivotal connection with said crane arm, which then allows pivoting around said axis. According to the invention, the bottom link member is furnished with a prismatic piece of a square cross-section, which extends coaxially with said central axis towards the top pivot joint and is on its terminal end portion furnished with a threaded bolt, which is furnished with a centrally arranged blind bore, into which a screw is screwed, which is on its first end portion furnished with a left oriented thread and on its opposite end portion with a right oriented thread. A compensating assembly is inserted between said top pivot joint and said bottom pivot joint of the link member, which compensating assembly is formed by two groups of plates, which are separated from each other by means of spacers, wherein each group consists of several plates, which are arranged in a sequence each above another and each of them is furnished with a centrally arranged substantially square-shaped passage, which is adjusted to the shape and dimensions of said prismatic piece on the bottom pivot joint of the link member. Each of said plates is furnished with a sequence of throughout bores, which are arranged along its circumference and are spaced from the external edge and equidistantly spaced apart from each other, as well as with two longitudinal recesses, which are spaced apart from each other. Said plates in each group are alternatively arranged, so that said recesses of each particular plate are arranged perpendicularly with respect to recesses of each plate located below or above it, or vice versa. Said plates and said spacers are connected with each other by means of screws, which extend through said bores within the plates. A cover plate is foreseen above said compensating assembly, and is by means of a nut and a washer, which are arranged on said threaded bolt on the prismatic piece on the bottom pivot joint, attached to said bottom pivot joint, wherein said screw protrudes through said cover plate towards the top pivot joint. A supporting plate is arranged above said cover plate and is firmly connected to said top pivot joint and furnished with two supporting members, which are spaced apart from each other and are arranged on the side of said top pivot joint symmetrically with respect to said central axis of the link member, and a bending beam is rest on said support members and is screwed to said supporting plate in two locations symmetrically with respect to said central axis, wherein said bending beam is uniformly conceived and comprises two supporting areas, which are arranged correspondingly to said supporting members on said supporting plate and between which two one above the other arranged bridges are available, namely a thicker bottom bridge, which is furnished with a central throughout bore, through which said screw extends, to which said bridge is attached by means of a nut, as well as a thinner and bending deformable top bridge, on the external surface of which, namely on its surface faced towards the top pivot joint, two sensors are attached, which are suitable for detecting each extensions and are arranged symmetrically with respect to the central axis. At the same time also two sensors for detecting any movements are foreseen, each of them includes both a sensor for detection of accelerations and a gyroscope, wherein the first sensor is located in the area of said link member, namely in the area between the first point on the axis, which extends through the top pivot joint, and the second point, which is located on the other axis, which extends through the bottom pivot joint and below said first point, while the second sensor is located in the area of said rotator at a sufficient distance apart from said second point on the axis, which extends through the bottom pivot joint of the link member.

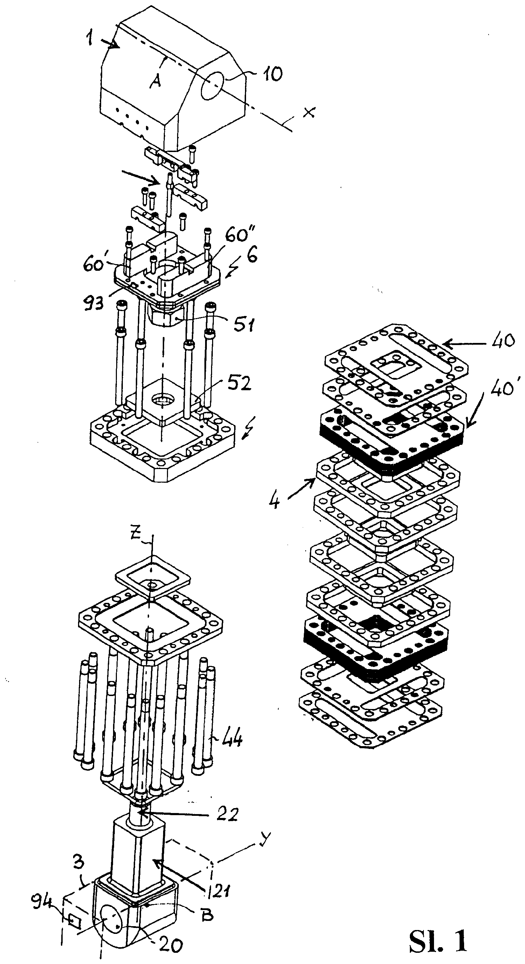

The invention will be described in more detail on the basis of an embodiment and in relation with the attached drawings, in which
- Fig. 1: is an explosion presentation of a member link according to the invention in disassembled state;

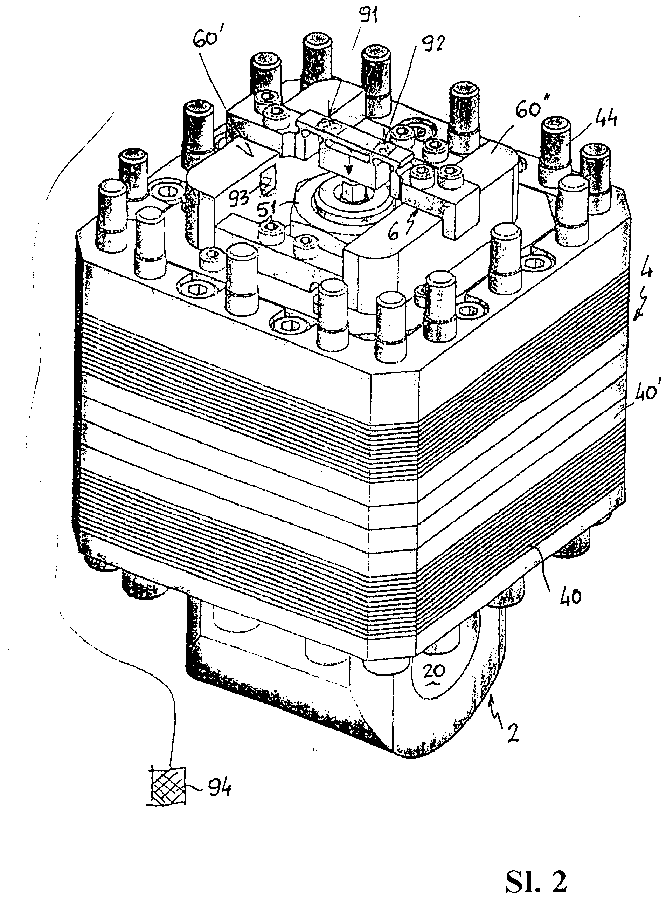

- Fig. 2: is an isometric presentation of a bottom part of the link member including the bottom pivot joint and compensating assembly;
- Fig. 3: is also an isometric presentation of the link member according to Fig. 1 in longitudinal cross-section;
- Fig. 4: is an isometric presentation of a single plate of the compensating assembly according to Figs. 1 - 3;
- Fig. 5: is an isometric presentation of a bending beam together with sensors according to Figs. 1 - 3;
- Fig. 6: is a schematically presented mathematic model of the link member according to Fig. 1 - 3, which is suitable for calculation of forces on the basis of each measured accelerations; and
- Fig. 7: is a schematically presented concept of interconnection of sensors used for measuring of extensions of the bending beam according to Fig. 5.

Link member comprises two pivot joints 1, 2, which are in a direction of vertical axis Z spaced apart from each other, namely a top pivot joint 1, which is arranged on the side of a crane arm, and a bottom pivot joint 2, which is arranged on the side of a rotator 3 or a gripping assembly for handling each load. Thus, said pivot joints 1, 2 are conceived substantially as a Cardan joint, and rotational axis X, Y thereof, around which said link member can be pivoted relatively to the crane arm and/or relatively to the rotator 3, extend parallel to each other. Said bottom pivot joint 2 of the link member is adjusted for pivotally connecting said link member with said rotator 3 and is conceived as an eye and furnished with a throughout passage 20, which extends along said rotational axis Y of the bottom pivot joint 2 and is adjusted to receive a bolt for establishing a pivotal connection with said rotator 3, which then allows pivoting around said axis Y, while said top pivot joint 1 of the link member is adjusted for pivotally connecting said link member with said crane arm and is conceived as an eye and furnished with a throughout passage 10, which extends along said rotational axis X of the top pivot joint 1 and is adjusted to receive a bolt for establishing a pivotal connection with said crane arm, which then allows pivoting around said axis X.

The bottom link member 2 is furnished with a prismatic piece 21 of a square cross-section, which extends coaxially with said central axis Z towards the top pivot joint 1 and is on its terminal end portion furnished with a threaded bolt 22, which is furnished with a centrally arranged blind bore, into which a screw 23 is screwed, which is on its first end portion furnished with a left oriented thread and on its opposite end portion with a right oriented thread.

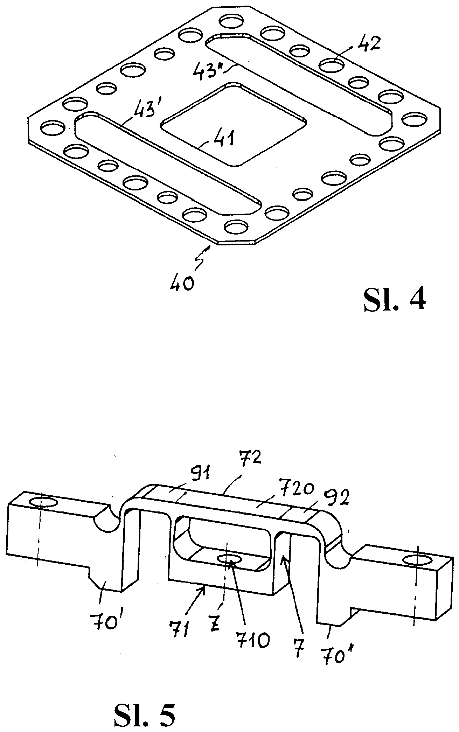

A compensating assembly 4 is inserted between said top pivot joint 1 and said bottom pivot joint 2 of the link member and said is formed of two groups of plates 40, and said groups are separated from each other by means of spacers 40'. One of said plates 40 is separately shown in Fig. 4.

Each group consists of several plates 40, which are arranged in a sequence each above another and each of them is furnished with a centrally arranged substantially square-shaped passage 41, which is adjusted to the shape and dimensions of said prismatic piece 21 on the bottom pivot joint 2 of the link member. Each of said plates 40 is furnished with a sequence of throughout bores 42, which are arranged along its circumference and are spaced from the external edge and equidistantly spaced apart from each other, as well as with two longitudinal recesses 43', 43", which are spaced apart from each other. Said plates 40 and said spacers 40' are connected with each other by means of screws 44 inserted through said bores 42 in on said plates 40. Plates 40 in each group are alternatively arranged, so that said recesses 43', 43" of each particular plate 40 are arranged perpendicularly with respect to recesses 43', 43" of each plate 40 located below or above it, or vice versa, and said groups are separated from each other by means of spacers 40'inserted there-between.

A cover plate 5 is foreseen above said compensating assembly 4, and is by means of a nut 51 and a washer 52, which are arranged on said threaded bolt 22 on the prismatic piece 21 on the bottom pivot joint 2, attached to said bottom pivot joint 2, wherein said screw 23 protrudes through said cover plate 5 towards the top pivot joint 1.

A supporting plate 6 is arranged above said cover plate 5 and is firmly connected to said top pivot joint 1 and furnished with two supporting members 60', 60", which are spaced apart from each other and are arranged on the side of said top pivot joint 1 symmetrically with respect to said central axis Z of the link member.

A bending beam 7 is rest on said support members 60', 60" and is separately shown in Fig. 5. Said beam 7 is screwed to said supporting plate 6 in two locations symmetrically with respect to said central axis Z, wherein said bending beam 7 is uniformly conceived and comprises two supporting areas 70', 70", which are arranged correspondingly to said supporting members 60', 60" on said supporting plate 6 and between which two one above the other arranged bridges 71, 72 are available, namely a thicker bottom bridge 71, which is furnished with a central throughout bore 710, through which said screw 23 extends, to which said bridge 71 is attached by means of a nut 71', as well as a thinner and bending deformable top bridge 72. Whenever the bottom pivot joint 2 is loaded, the bottom bridge 72 is exposed to bending stresses. Due to detecting each deforming of said bottom bridge 72 two sensors 91, 92 are attached on the external surface thereof, namely on its surface faced towards the top pivot joint 1 and symmetrically with respect to the central axis Z, and these sensors 91, 92 are then able to detect each extensions and are arranged.

Friction and other phenomena, which could have an essential impact to determining of each measured force, which is transferred from the bottom pivot joint 2 towards said bending beam 7 furnished with said sensors 71, 72, and should act exactly along said central axis X, are herewith eliminated thanks to the presence of said compensating assembly 4 with plates 40, where the transversal forces are eliminated.

Each deformation of said bending beam 7 results from dynamic forces acting in various possible directions, so that by determining each factual weight of the load each possible inertia forces resulting from accelerations in various directions must be completely eliminated. To this aim, two sensors 93, 94 for detecting any movements are foreseen, each of them includes both a sensor for detection of accelerations and a gyroscope, wherein the first sensor 93 is located in the area of said link member, namely in the area between the first point A on said axis X extending through the top pivot joint 1 and the second point B, which is located on said axis Y extending through the bottom pivot joint 2 and below said first point A, while the second sensor 94 is located in the area of said rotator 3 at a sufficient distance apart from said second point B on the axis Y extending through the bottom pivot joint 2 of the link member.

On the basis of values of accelerations as measured by means of the first sensor 93, as well as of values of accelerations as measured by means of the second sensor 94, in is then possible to mathematically eliminate all those forces, which are in certain moment and in certain position, including said rotator 3 and gripping assembly on the bottom pivot joint 2, due to each hanging load acting to said bending beam 7, but in fact do not represent neither a component nor a portion of the weight force.

The bending beam 7 is supported in the area of two resting supports 70', 70" (Fig. 5) and is therefore loaded in two points and moreover by means of the screw 23 connected with the active point A. Thanks to such concept, just a small displacement of said point A on said bending beam 7 is then transformed into pretty large specific deformations, which enables appropriate sensibility in transformation of mechanical values to electrical values.

When bearing in mind all loads, to which said link member is exposed, such concept with a group of plates 40 arranged one above the other enables formation of an appropriately sensitive weighing instrument. Said alternative assembling of plates 40 enables that the deformable portions of plates 40 are not in contact with each other, by which a friction hysteresis is essentially reduced.

Said link member must therefore enable performing each required function of such link member, namely withstanding to any tension, bending and torsion stresses, as well as maintaining the distance between the crane arm and the rotator, and in addition to that, also weighing of each load.

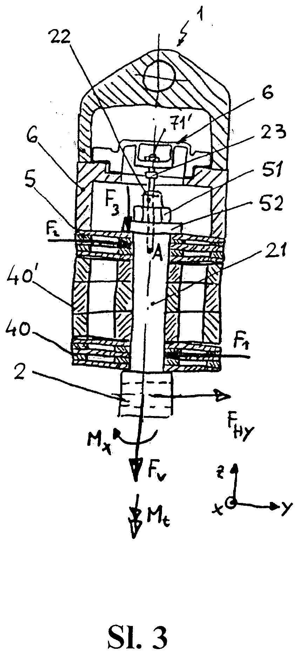

Each loading is transferred from the rotator 3 or a gripping assembly towards said bending beam 7 with secondary sensors in a manner, which is presented in Fig. 3. Forces and torques Fᵥ, F_{Hx}, F_{Hy}, Mₜ, Mₓ are transferred from the rotator 3 to said prismatic piece 23 via the bottom pivot joint 2. Vertical forces Fᵥ are transferred through said piece 23 thanks to said nut 51 and washer 52 towards said screwed bolt 22, so that the axial force F₃ is transferred to the resilient plates 40 of the first and second group. Due to said force, the plates 40 become deflected, and the piece 23 is displaced downwards along the central axis Z. Due to displacement of the active point A also the screw 22 is displaced, which leads to bending of the beam 7 and activation of sensors 91, 92 attached thereon. In such way a complete vertical force is measured without any influence of any other loadings. The other loadings F_{Hx}, F_{Hy}, Mₓ according to Fig. 3 are taken-over by said plates 40 as a couple of horizontal forces F₁ and F₂ or a torsion load Mₜ acting to plates 40 in the first and second group, so that these lastly mentioned loadings actually have no influence on bending of the beam 7 and are therefore eliminated from said measuring.

Consequently, said dynamic weighing function is therefore performed by means of a dynamometer, which is capable to determine the axial force and also to extract it from any other loadings by means of additional sensors and electronics, which is suitable for determining that portion of each measured forces, which actually represents the weight, as well as for determining those portions or components of forces, which result from accelerations occurring during hoisting and manipulating with each load.

The member link is conceived in such way that it is possible to attach it to each crane and rotator 2 or. gripping assembly in the same manner as any other state of the art link member, wherein it is capable to withstand each possible external loadings and to extract the axial force, which is then transferred to displacement of said active point A in the area of said sensors 91, 92 within the link member. In this, said bending beam 7 with said sensors 91, 92, namely strain gauges, transforms said displacement of the point A into deformation of the beam 7 and thereafter into appropriate electric signal.

A single sensor, loaded with weight force, is quite sufficient for determining a mass in a static state or by uniformly movement thereof, since the gravitation acceleration is constant and known. However, by uniformly moving the mass also various components of the acceleration, which are correlated with such force, in the mass centre of the measured mass must be measured directly or indirectly.

In general, a dynamometer and an acceleration meter are sufficient for performing such measurement. By lifting and lowering of the load said acceleration meter can be located remotely from the measured object, while by rotating such sensor would have to be positioned within the mass centre of the measured object. Since this last is not practically feasible, components of acceleration due to rotation are measured indirectly from certain distance apart from the mass centre, namely by means of measuring each rotational speed as well as of the distance between the sensor (gyroscope) and said center.

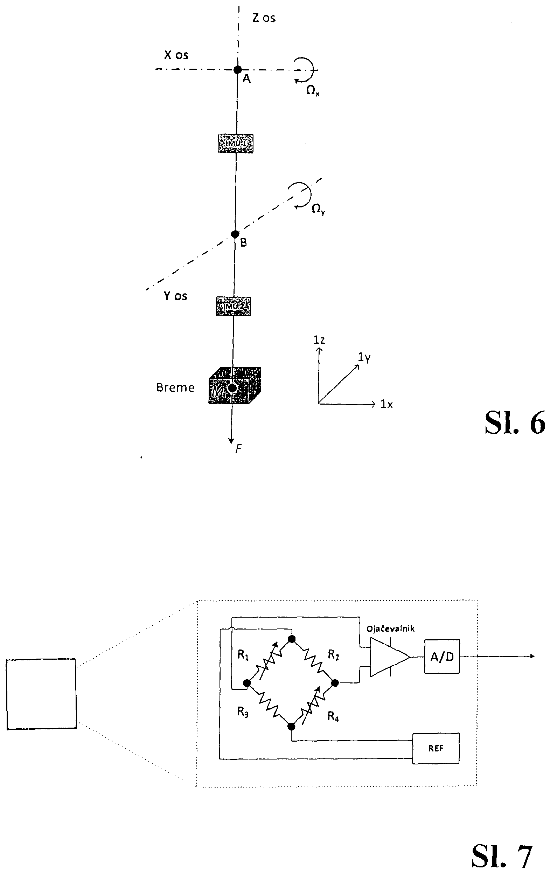

By lifting each load by means of a crane and various gripping assemblies, accelerations in direction of axis of each hanging load and in both directions by rotating the load around each axis in both pivot joints on the link member are measured in addition to each tension force therein. A model of such system with a hanging load with marked positions of mass centre of the load, axis of pivot joints 1, 2 and positions of sensors 91, 92, 93, 94 is shown in Fig. 6. All these points are marked in a coordinate system of a moving weight, and a center of the local coordinate system corresponds to a mass centre *M*. The weight can be lifted or lowered along the coordinate axis ***1z*** and swiveled around coordinate axis ***1x*** and ***1*y.**

Weight is measured by means of a sensor for detecting mechanical stresses, which is embedded within the link member. Each resistance sensor 91, 92 for detecting mechanical extensions is available as a full bridge with four resistance members i.e. as a full-bridge strain gauge.

Said acceleration meter and gyroscope are integrated within the same integrated electronic circuit, and therefore form a combined motion sensor i.e. inertia measurement unit (IMU). Two IMU sensors 93, 94 are required for the purpose of indirect measuring of all components of acceleration. The major portion of acceleration is detected by the first sensor 93, which is placed in the area of the member link. The other sensor is located in the area of the rotator 3 or a gripping assembly.

Position of the first IMU motion sensor 93 is shown in Fig. 6 and is located between the points A and B. In this position said sensor 93 is able to detect acceleration along the axis ***1z*** as well as rotation around the top axis ***1x*** on the link member, but is unable to detect any pivoting around the axis ***1y.*** For the purpose of extremely precious measurement of accelerations the gyroscope must be able to detect pivoting around both axis X, Y of the link member 1. The second IMU sensor 94 is therefore located below the bottom axis Y of the link member and is able to detect acceleration in a direction ***1z*** as well as any rotation around the axis *1*x and 1*y* in both pivot joints 1, 2 on the link member. Position of this second IMU motion sensor 94 is shown in Fig. 6 between the points B and M.

Said measuring system is intended for mobile outdoor application. The system allows autonomous operation, and upon establishing appropriate connection with Internet it can be globally connected with a cloud application.

The measuring modules of such motion sensor and IMU sensor 93, 94 are via digital outputs by means of wires directly connected to a digital processing unit, in which all data received from sensors is then collected and processed.

The electric principles of such measuring module are presented in Fig. 7. The sensor with four integrated resistors in a bridged interconnection is supplied by a reference voltage source. The electric output signal of the sensor is amplified by means of instrumental amplifier and transformed into digital form, which is fluently with each desired sample frequency forwarded to a processing unit. Each particular IMU motion sensor includes a miniature accelerometer and gyroscope, which are in the same integrated circuit produced by means of MEMS MicroElectroMechanical System) technology. In this, just commonly available and low-cost IMU motion sensors can be used, which are then via the standardized I2C port directly connectable to the processing unit.

Computer program in the processing unit is able to run the algorithms, which are suitable for filtering of sensor signals, as well as an algorithm, which enables calculation of mass of a moving object on the basis of measured data obtained from sensors for measuring mechanical stresses, acceleration meters and gyroscopes. Detecting all components of acceleration, which may act in the area of each moving load, by simultaneously measuring of a tension force on the link member by means of said sensors 91, 92, enables very precisely calculating of the mass of the load. Each data concerning said mass of the load is calculated periodically with a pre-defined frequency and is stored into a local memorizing unit.

Each measuring results are displayed on a local displaying unit, which in addition to that also serves for controlling of operation of such measuring system. Each selected relevant data is via a communication unit forwarded to a cloud application and is then stored in a cloud, which enables remote reviewing, supervision and controlling the whole system.

## Claims

1. Link member for connection of a gripping assembly to a hydraulic crane arm with integrated dynamic weighing assembly, wherein such link member is furnished with two pivot joints (1, 2), which are in direction of vertical axis (Z) spaced apart from each other, namely a top pivot joint (1), which is arranged on the side of a crane arm, and a bottom pivot joint (2), which is arranged on the side of a rotator (3) or a gripping assembly for handling each load, wherein said pivot joints (1, 2) are conceived substantially as a Cardan joint, and rotational axis (X, Y) thereof, around which said link member can be pivoted relatively to the crane arm and/or relatively to said rotator (3), extend parallel to each other, and wherein said bottom pivot joint (2) of the link member is adjusted for pivotally connecting said link member with said rotator (3) and is conceived as an eye and furnished with a throughout passage (20), which extends along said rotational axis (Y) of the bottom pivot joint (2) and is adjusted to receive a bolt for establishing a pivotal connection with said rotator (3), which then allows pivoting around said axis (Y), and wherein said top pivot joint (1) of the link member is adjusted for pivotally connecting said link member with said crane arm and is conceived as an eye and furnished with a throughout passage (10), which extends along said rotational axis (X) of the top pivot joint (1) and is adjusted to receive a bolt for establishing a pivotal connection with said crane arm, which then allows pivoting around said axis (X), **characterized in that** the bottom link member (2) is furnished with a prismatic piece (21) of a square cross-section, which extends coaxially with said central axis (Z) towards the top pivot joint (1) and is on its terminal end portion furnished with a threaded bolt (22), which is furnished with a centrally arranged blind bore, into which a screw (23) is screwed, which is on its first end portion furnished with a left oriented thread and on its opposite end portion with a right oriented thread, wherein a compensating assembly (4) is inserted between said top pivot joint (1) and said bottom pivot joint (2) of the link member, and is formed by two groups of plates (40), which are separated from each other by means of spacers (40'), wherein each group consists of several plates (40), which are arranged in a sequence each above another and each of them is furnished with a centrally arranged substantially square-shaped passage (41), which is adjusted to the shape and dimensions of said prismatic piece (21) on the bottom pivot joint (2) of the link member, and wherein each of said plates (40) is furnished with a sequence of throughout bores (42), which are arranged along its circumference and are spaced from the external edge and equidistantly spaced apart from each other, as well as with two longitudinal recesses (43', 43"), which are spaced apart from each other, and wherein said plates (40) in each group are alternatively arranged, so that said recesses (43', 43") of each particular plate (40) are arranged perpendicularly with respect to recesses (43', 43") of each plate (40) located below or above it, or vice versa, while said plates (40) and said spacers (40') are connected with each other by means of screws (44), which extend through said bores (42) within the plates (40), and wherein a cover plate (5) is foreseen above said compensating assembly (4), and is by means of a nut (51) and a washer (52), which are arranged on said threaded bolt (22) on the prismatic piece (21) on the bottom pivot joint (2), attached to said bottom pivot joint (2), wherein said screw (23) protrudes through said cover plate (5) towards the top pivot joint (1), and wherein a supporting plate (6) is arranged above said cover plate (5) and is firmly connected to said top pivot joint (1) and furnished with two supporting members (60', 60"), which are spaced apart from each other and are arranged on the side of said top pivot joint (1) symmetrically with respect to said central axis (Z) of the link member, and a bending beam (7) is rest on said support members (60', 60") and is screwed to said supporting plate (6) in two locations symmetrically with respect to said central axis (Z), wherein said bending beam (7) is uniformly conceived and comprises two supporting areas (70', 70"), which are arranged correspondingly to said supporting members (60', 60") on said supporting plate (6) and between which two one above the other arranged bridges (71, 72) are available, namely a thicker bottom bridge (71), which is furnished with a central throughout bore (710), through which said screw (23) extends, to which said bridge is attached by means of a nut (71'), as well as a thinner and bending deformable top bridge (72), on the external surface of which, namely on its surface faced towards the top pivot joint (1), two sensors (91, 92) are attached, which are suitable for detecting each extensions and are arranged symmetrically with respect to the central axis (Z), while at the same time also two sensors (93, 94) for detecting any movements are foreseen, each of them includes both a sensor for detection of accelerations and a gyroscope, wherein the first sensor (93) is located in the area of said link member, namely in the area between the first point (A) on said axis (X) extending through the top pivot joint (1) and the second point (B), which is located on said axis (Y) extending through the bottom pivot joint (2) and below said first point (A), while the second sensor (94) is located in the area of said rotator (3) at a sufficient distance apart from said second point (B) on the axis (Y) extending through the bottom pivot joint (2) of the link member.

2. Crane, comprising at least one movable arm and a gripping assembly for handling a load **characterized in that** said gripping assembly is via the link member according to Claim 1 connected with said movable arm.

3. Mobile crane, comprising at least one movable arm and a gripping assembly for handling a load **characterized in that** said gripping assembly is via the link member according to Claim 1 connected with said movable arm.

4. Hydraulic mobile crane, comprising at least one movable arm and a gripping assembly for handling a load **characterized in that** said gripping assembly is via the link member according to Claim 1 connected with said movable arm.

## Patentansprüche

1. Verbindungselement zur Verbindung einer Greifbaugruppe mit einem hydraulischen Kranarm mit integrierter Baugruppe zum dynamischen Wägen, wobei ein solches Verbindungselement mit zwei Drehgelenken (1, 2) versehen ist, die in Richtung der Vertikalachse (Z) voneinander beabstandet sind, nämlich einem oberen Drehgelenk (1), das auf der Seite eines Kranarms angeordnet ist, und einem unteren Drehgelenk (2), das auf der Seite eines Rotators (3) oder einer Greifbaugruppe zum Handhaben aller Lasten angeordnet ist, wobei die Drehgelenke (1, 2) im Wesentlichen als Kardangelenk konzipiert sind und deren jeweilige Drehachsen (X, Y), um die sich das Verbindungselement in Bezug auf den Kranarm und/oder in Bezug auf den Rotator (3) drehen lässt, sich parallel zueinander erstrecken, und wobei das untere Drehgelenk (2) des Verbindungselements für das drehgelenkige Verbinden des Verbindungselements mit dem Rotator (3) angepasst und als Öse konzipiert und mit einer Durchgangsbohrung (20) versehen ist, die sich längs der Rotationsachse (Y) des unteren Drehgelenks (2) erstreckt und dafür angepasst ist, einen Schraubenbolzen zum Herstellen einer Drehverbindung mit dem Rotator (3) aufzunehmen, der dann das Drehen um die Achse (Y) gestattet, und wobei das obere Drehgelenk (1) des Verbindungselements für das drehgelenkige Verbinden des Verbindungselements mit dem Kranarm angepasst und als Öse konzipiert und mit einer Durchgangsbohrung (10) versehen ist, die sich längs der Rotationsachse (X) des oberen Drehgelenks (1) erstreckt und dafür angepasst ist, einen Schraubenbolzen zum Herstellen einer Drehverbindung mit dem Kranarm aufzunehmen, der dann das Drehen um die Achse (X) gestattet, **dadurch gekennzeichnet, dass** das untere Verbindungselement (2) mit einem prismenförmigen Teil (21) quadratischen Querschnitts versehen ist, das sich koaxial zu der Mittelachse (Z) zum oberen Drehgelenk (1) hin erstreckt und an seinem Anschlussendteil mit einem Gewindebolzen (22) versehen ist, der mit einem mittig angeordneten Grundloch versehen ist, in das eine Schraube (23) geschraubt ist, die an ihrem ersten Endteil mit einem Linksgewinde und an ihrem entgegengesetzten Endteil mit einem Rechtsgewinde versehen ist, wobei eine Kompensationsbaugruppe (4) zwischen dem oberen Drehgelenk (1) und dem unteren Drehgelenk (2) des Verbindungselements eingefügt ist und von zwei Gruppen von Platten (40) gebildet wird, die durch Distanzstücke (40') voneinander getrennt sind, wobei jede Gruppe aus mehreren Platten (40) besteht, die aufeinanderfolgend übereinander angeordnet sind und jede von ihnen mit einem mittig angeordneten, im Wesentlichen quadratförmigen Durchbruch (41) versehen ist, der an die Form und die Abmessungen des prismenförmigen Teils (21) am unteren Drehgelenk (2) des Verbindungselements angepasst ist, und wobei jede der Platten (40) versehen ist mit einer Aufeinanderfolge von Durchgangsbohrungen (42), die längs ihres Umfangs angeordnet sind und einen Abstand zur Außenkante aufweisen und voneinander gleich beabstandet sind, sowie mit zwei Längsaussparungen (43', 43"), die voneinander beabstandet sind, und wobei die Platten (40) in jeder Gruppe so alternativ angeordnet sind, dass die Aussparungen (43', 43") jeder speziellen Platte (40) in Bezug auf die Aussparungen (43', 43") jeder Platte (40) senkrecht angeordnet sind, die sich unter oder über ihr befindet, oder umgekehrt, während die Platten (40) und die Distanzstücke (40') mithilfe von Schrauben (44) miteinander verbunden sind, die sich durch die Bohrungen (42) in den Platten (40) hindurch erstrecken, und wobei eine Abdeckplatte (5) über der Kompensationsbaugruppe (4) vorgesehen ist und mithilfe einer Mutter (51) und einer Beilagscheibe (52), die am Gewindebolzen (22) des prismenförmigen Teils (21) am unteren Drehgelenk (2) angeordnet sind, an dem unteren Drehgelenk (2) befestigt ist, wobei die Schraube (23) durch die Abdeckplatte (5) hindurch zum oberen Drehgelenk (1) hin hervorsteht, und wobei eine Auflageplatte (6) oberhalb der Abdeckplatte (5) angeordnet und mit dem oberen Drehgelenk (1) fest verbunden und mit zwei Auflageelementen (60', 60") versehen ist, die voneinander beanstandet und auf der Seite des oberen Drehgelenks (1) in Bezug auf die Mittelachse (Z) des Verbindungselements symmetrisch angeordnet sind, und ein Biegebalken (7) auf den Auflageelementen (60', 60") aufliegt und an die Auflageplatte (6) an zwei Orten symmetrisch zur Mittelachse (Z) geschraubt ist, wobei der Biegebalken (7) gleichmäßig konzipiert ist und zwei Auflageflächen (70', 70") umfasst, die korrespondierend zu den Auflageelementen (60', 60") auf der Auflageplatte (6) angeordnet sind und zwischen denen zwei übereinander angeordnete Brücken (71, 72) verfügbar sind, nämlich eine dickere untere Brücke (71), die mit einer mittigen Durchgangsbohrung (710) versehen ist, durch die hindurch sich die Schraube (23) erstreckt, an der die Brücke mithilfe einer Mutter (71') befestigt ist, sowie eine dünnere und biegeverformbare obere Brücke (72), an deren Außenfläche, das heißt an der zum oberen Drehgelenk (1) zeigenden Fläche, zwei Sensoren (91, 92) angebracht sind, die für das Erfassen aller Dehnungen geeignet und in Bezug auf die Mittelachse (Z) symmetrisch angeordnet sind, während gleichzeitig auch zwei Sensoren (93, 94) zum Erfassen jeglicher Bewegungen vorgesehen sind, von denen jeder sowohl einen Sensor zum Erfassen von Beschleunigungen als auch einen Kreisel umfasst, wobei der erste Sensor (93) sich im Bereich des Verbindungselements befindet, nämlich im Bereich zwischen dem ersten Punkt (A) auf der Achse (X), die sich durch das obere Drehgelenk (1) und den zweiten Punkt (B) erstreckt, der sich auf der Achse (Y) befindet, die sich durch das untere Drehgelenk (2) und unterhalb des ersten Punkts (A) erstreckt, während der zweite Sensor (94) sich im Bereich des Rotators (3) befindet, und zwar in einem ausreichenden Abstand entfernt von dem zweiten Punkt (B) auf der Achse (Y), die sich durch das untere Drehgelenk (2) des Verbindungselements erstreckt.

2. Kran, der mindestens einen beweglichen Arm und eine Greifbaugruppe zum Handhaben einer Last umfasst, **dadurch gekennzeichnet, dass** die Greifbaugruppe über das Verbindungselement nach Anspruch 1 mit dem beweglichen Arm verbunden ist.

3. Mobilkran, der mindestens einen beweglichen Arm und eine Greifbaugruppe zum Handhaben einer Last umfasst, **dadurch gekennzeichnet, dass** die Greifbaugruppe über das Verbindungselement nach Anspruch 1 mit dem beweglichen Arm verbunden ist.

4. Hydraulischer Mobilkran, der mindestens einen beweglichen Arm und eine Greifbaugruppe zum Handhaben einer Last umfasst, **dadurch gekennzeichnet, dass** die Greifbaugruppe über das Verbindungselement nach Anspruch 1 mit dem beweglichen Arm verbunden ist.

## Revendications

1. Élément de liaison destiné au raccordement d'un ensemble de préhension à un bras de grue hydraulique doté d'un ensemble de pesage dynamique intégré, dans lequel un tel élément de liaison est pourvu de deux articulations à pivot (1, 2) qui sont espacées l'une de l'autre dans la direction d'un axe vertical (Z), à savoir une articulation à pivot supérieure (1) qui est placée du côté d'un bras de grue, et une articulation à pivot inférieure (2) qui est placée du côté d'un rotateur (3) ou d'un ensemble de préhension destiné à manipuler chaque charge, dans lequel lesdites articulations à pivot (1, 2) sont sensiblement conçues comme un joint de cardan, et leurs axes de rotation (X, Y), autour desquels ledit élément de liaison peut pivoter par rapport au bras de grue et/ou par rapport audit rotateur (3), s'étendent parallèlement l'un à l'autre, et dans lequel ladite articulation à pivot inférieure (2) de l'élément de liaison est ajustée pour relier ledit élément de liaison audit rotateur (3) de façon pivotante et est conçue comme un œillet et pourvue d'un passage traversant (20) qui s'étend le long dudit axe de rotation (Y) de l'articulation à pivot inférieure (2) et qui est ajusté pour recevoir un boulon afin d'établir une liaison pivotante avec ledit rotateur (3), ce qui permet ensuite le pivotement autour dudit axe (Y), et dans lequel ladite articulation à pivot supérieure (1) de l'élément de liaison est ajustée pour relier ledit élément de liaison audit bras de grue de façon pivotante et est conçue comme un œillet et pourvue d'un passage traversant (10) qui s'étend le long dudit axe de rotation (X) de l'articulation à pivot supérieure (1) et qui est ajusté pour recevoir un boulon afin d'établir une liaison pivotante avec ledit bras de grue, ce qui permet ensuite le pivotement autour dudit axe (X), **caractérisé en ce que** ledit élément de liaison inférieur (2) est pourvu d'une pièce prismatique (21) de section transversale carrée, qui s'étend coaxialement audit axe central (Z) vers l'articulation à pivot supérieure (1) et est pourvue sur sa partie d'extrémité terminale d'un boulon fileté (22) qui est pourvu d'un trou borgne placé en son centre, dans lequel est vissée une vis (23) qui est pourvue sur sa première partie d'extrémité d'un filet orienté à gauche et sur sa partie d'extrémité opposée d'un filet orienté à droite, dans lequel un ensemble de compensation (4) est inséré entre ladite articulation à pivot supérieure (1) et ladite articulation à pivot inférieure (2) de l'élément de liaison, et est constitué de deux groupes de plaques (40) qui sont séparés l'un de l'autre au moyen d'entretoises (40'), dans lequel chaque groupe se compose de plusieurs plaques (40) qui sont placées successivement les unes au-dessus des autres et qui sont pourvues chacune en leur centre d'un passage de forme sensiblement carrée (41) qui est ajusté à la forme et aux dimensions de ladite pièce prismatique (21) sur l'articulation à pivot inférieure (2) de l'élément de liaison, et dans lequel chacune desdites plaques (40) est pourvue d'une succession de trous traversants (42) qui sont placés le long de sa circonférence et qui sont espacés du bord externe et sont placés de manière équidistante les uns des autres, ainsi que de deux évidements longitudinaux (43', 43") qui sont espacés l'un de l'autre, et dans lequel lesdites plaques (40) de chaque groupe sont disposées en alternance, de manière que lesdits évidements (43', 43") de chaque plaque particulière (40) soient disposés perpendiculairement par rapport aux évidements (43', 43") de chaque plaque (40) située au-dessous ou au-dessus d'elle, ou vice versa, tandis que lesdites plaques (40) et lesdites entretoises (40') sont reliées les unes aux autres au moyen de vis (44) qui s'étendent à travers lesdits trous (42) à l'intérieur des plaques (40), et dans lequel une plaque de recouvrement (5) est prévue au-dessus dudit ensemble de compensation (4), et est fixée, au moyen d'un écrou (51) et d'une rondelle (52) qui sont placés sur ledit boulon fileté (22) sur la pièce prismatique (21) sur l'articulation à pivot inférieure (2), à ladite articulation à pivot inférieure (2), dans lequel ladite vis (23) fait saillie à travers ladite plaque de recouvrement (5) vers l'articulation à pivot supérieure (1), et dans lequel une plaque de support (6) est placée au-dessus de ladite plaque de recouvrement (5) et est solidement raccordée à ladite articulation à pivot supérieure (1) et pourvue de deux éléments de support (60', 60") qui sont espacés l'un de l'autre et sont placés du côté de ladite articulation à pivot supérieure (1) symétriquement par rapport audit axe central (Z) de l'élément de liaison, et une poutre de flexion (7) repose sur lesdits éléments de support (60', 60") et est vissée à ladite plaque de support (6) à deux emplacements, symétriquement par rapport audit axe central (Z), dans lequel ladite poutre de flexion (7) est conçue de façon uniforme et comprend deux zones de support (70', 70") qui sont placées de manière à correspondre auxdits éléments de support (60', 60") sur ladite plaque de support (6) et entre lesquelles se trouvent, placés l'un au-dessus de l'autre, deux ponts (71, 72), à savoir un pont inférieur plus épais (71) qui est pourvu d'un trou traversant central (710) à travers lequel s'étend ladite vis (23) à laquelle ledit pont est attaché au moyen d'un écrou (71'), ainsi qu'un pont supérieur déformable de flexion et plus fin (72), sur la surface externe duquel, à savoir sur sa surface orientée vers l'articulation à pivot supérieure (1), sont fixés deux capteurs (91, 92) qui sont appropriés pour détecter chacun des allongements et sont placés symétriquement par rapport à l'axe central (Z), tandis que sont également prévus, en même temps, deux capteurs (93, 94) destinés à détecter des mouvements quelconques, chacun d'eux inclut à la fois un capteur de détection d'accélérations et un gyroscope, dans lequel le premier capteur (93) se situe dans la zone dudit élément de liaison, à savoir dans la zone entre le premier point (A) sur ledit axe (X) s'étendant à travers l'articulation à pivot supérieure (1) et le second point (B) qui se situe sur ledit axe (Y) s'étendant à travers l'articulation à pivot inférieure (2) et sous ledit premier point (A), tandis que le second capteur (94) se situe dans la zone dudit rotateur (3) à une distance suffisante dudit second point (B) sur l'axe (Y) s'étendant à travers l'articulation à pivot inférieure (2) de l'élément de liaison.

2. Grue comprenant au moins un bras mobile et un ensemble de préhension destiné à manipuler une charge, **caractérisée en ce que** ledit ensemble de préhension est raccordé, par l'intermédiaire de l'élément de liaison selon la revendication 1, audit bras mobile.

3. Grue mobile comprenant au moins un bras mobile et un ensemble de préhension destiné à manipuler une charge, **caractérisée en ce que** ledit ensemble de préhension est raccordé, par l'intermédiaire de l'élément de liaison selon la revendication 1, audit bras mobile.

4. Grue mobile hydraulique comprenant au moins un bras mobile et un ensemble de préhension destiné à manipuler une charge, **caractérisée en ce que** ledit ensemble de préhension est raccordé, par l'intermédiaire de l'élément de liaison selon la revendication 1, audit bras mobile.
